# EUROPEAN PATENT APPLICATION

(11) **EP 4 557 776 A1**
(43) Date of publication of application: **21.05.2025**
(21) Application number: 22950760.3
(22) Date of filing: 15.07.2022
(51) Int. Cl.: H04W 4/02

(54) **SL PRS CONFIGURATION NEGOTIATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/106126
(87) International publication number: WO 2024/011642

(57) **Abstract**

The present invention relates to the technical field of communications and provides an SL PRS configuration negotiation method and apparatus, a device, and a storage medium. The method comprises: negotiating with a second device to determine a first SL PRS configuration, the first SL PRS configuration being used for SL positioning; and in response to satisfying a preset condition, sending the first SL PRS configuration to a first terminal device. The present invention provides a processing method for the situation of "SL PRS configuration negotiation" so as to provide a negotiation mechanism of the SL PRS configuration between a first device and the second device, reduce the situation that the SL PRS configuration cannot be determined, and improve the accuracy of SL PRS configuration determination.

## Description

### TECHNICAL FIELD

The present disclosure relates to the field of communication technology, and more particularly to a method and apparatus for negotiating a sidelink (SL) positioning reference signal (PRS) configuration, a device and a storage medium.

### BACKGROUND

In a communication system, a positioning of a sidelink link between terminal devices includes an absolute positioning, a relative positioning, and a ranging. The ranging usually only involves two terminal devices, that is, the ranging is performed between two terminal devices, but the absolute positioning and the relative positioning may involve a plurality of assistance terminal devices to participate in the positioning to improve an accuracy of the absolute positioning and the relative positioning. However, the related art does not involve a negotiation mechanism for an SL PRS resource configuration between a terminal device and a positioning assistance terminal device, resulting in a low accuracy of an SL PRS configuration.

### SUMMARY

The present disclosure provides a method and apparatus for negotiating an SL PRS configuration, a device and a storage medium to provide a negotiation mechanism for the SL PRS configuration, which may determine the SL PRS configuration and improve an accuracy of an SL PRS configuration determination.

In an aspect, embodiments of the present disclosure provide a method for negotiating a sidelink positioning reference signal (SL PRS) configuration, which is performed by a first device and includes:
negotiating with a second device to determine a first SL PRS configuration, in which the first SL PRS configuration is configured for an SL positioning; and
sending the first SL PRS configuration to a first terminal device in response to satisfying a preset condition.

Optionally, in an embodiment of the present disclosure, negotiating with the second device to determine the first SL PRS configuration includes:
negotiating with one or more candidate positioning assistance terminal devices to determine a first SL PRS configuration of one or more positioning assistance terminal devices.

Optionally, in an embodiment of the present disclosure, negotiating with the one or more candidate positioning assistance terminal devices to determine the first SL PRS configuration of the one or more positioning assistance terminal devices includes:
sending an SL PRS configuration request to the one or more candidate positioning assistance terminal devices; and
receiving a first SL PRS configuration sent by the one or more candidate positioning assistance terminal devices for the SL PRS configuration request.

Optionally, in an embodiment of the present disclosure, negotiating with the one or more candidate positioning assistance terminal devices to determine the first SL PRS configuration of the one or more positioning assistance terminal devices includes:
sending a first SL PRS configuration to the one or more candidate positioning assistance terminal devices; and
receiving confirmation information sent by the one or more candidate positioning assistance terminal devices for the first SL PRS configuration.

Optionally, in an embodiment of the present disclosure, negotiating with the one or more candidate positioning assistance terminal devices to determine the first SL PRS configuration of the one or more positioning assistance terminal devices includes:
sending an SL PRS configuration request to a master positioning assistance terminal device in the one or more candidate positioning assistance terminal devices; and
receiving a first SL PRS configuration sent by the master positioning assistance terminal device for the SL PRS configuration request.

Optionally, in an embodiment of the present disclosure, the first device includes a second terminal device, the method is performed by the second terminal device, and the preset condition includes at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

Optionally, in an embodiment of the present disclosure, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

Optionally, in an embodiment of the present disclosure, the third terminal device includes at least one of:
a master positioning assistance terminal device; or
a terminal device establishing an SL connection with the first terminal device.

Optionally, in an embodiment of the present disclosure, negotiating with the second device to determine the first SL PRS configuration includes:
negotiating with the network-side device or the LMF to determine a first SL PRS configuration of one or more positioning assistance terminal devices.

Optionally, in an embodiment of the present disclosure, negotiating with the network-side device or the LMF to determine the first SL PRS configuration of the one or more positioning assistance terminal devices includes:
sending an SL PRS configuration request to the network-side device, in which the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the network-side device for the SL PRS configuration request.

Optionally, in an embodiment of the present disclosure, negotiating with the network-side device or the LMF to determine the first SL PRS configuration of the one or more positioning assistance terminal devices includes:
sending an SL PRS configuration request to the LMF, in which the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the LMF for the SL PRS configuration request.

Optionally, in an embodiment of the present disclosure, the method further includes at least one of:
negotiating with a candidate positioning assistance terminal device to determine the first SL PRS configuration via a sidelink universal mobile telecommunication system long term evolution (LTE) positioning protocol (LPP) message;
negotiating with a candidate positioning assistance terminal device to determine the first SL PRS configuration via a PC5-S message; or
negotiating with a candidate positioning assistance terminal device to determine the first SL PRS configuration via a radio resource control (RRC) message.

Optionally, in an embodiment of the present disclosure, the sidelink LPP message includes request assistance information of a sidelink LPP and/or provide assistance information of a sidelink LPP.

Optionally, in an embodiment of the present disclosure, the RRC message includes an SL RRC reconfiguration message.

Optionally, in an embodiment of the present disclosure, the first device includes a network-side device, the method is performed by the network-side device, and negotiating with the second device to determine the first SL PRS configuration includes:
negotiating with an LMF to determine a first SL PRS configuration of one or more positioning assistance terminal devices.

Optionally, in an embodiment of the present disclosure, negotiating with the LMF to determine the first SL PRS configuration of the one or more positioning assistance terminal devices includes:
sending an SL PRS configuration request to the LMF, in which the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the LMF for the SL PRS configuration request.

Optionally, in an embodiment of the present disclosure, the first device includes an LMF, the method is performed by the LMF, and negotiating with the second device to determine the first SL PRS configuration includes:
negotiating with a network-side device to determine a first SL PRS configuration of one or more positioning assistance terminal devices.

Optionally, in an embodiment of the present disclosure, negotiating with the network-side device to determine the first SL PRS configuration of the one or more positioning assistance terminal devices includes:
sending an SL PRS configuration request to the network-side device, in which the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the network-side device for the SL PRS configuration request.

Optionally, in an embodiment of the present disclosure, the method further includes:
negotiating with a terminal device to determine the first SL PRS configuration via an LPP message.

Optionally, in an embodiment of the present disclosure, the LPP message includes request assistance information of an LPP and/or provide assistance information of an LPP.

Optionally, in an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

Optionally, in an embodiment of the present disclosure, the fourth terminal device includes at least one of:
a positioning assistance terminal device;
a master positioning assistance terminal device; or
a terminal device establishing a communication connection with the network-side device or the LMF.

Optionally, in an embodiment of the present disclosure, the first SL PRS configuration includes at least one of:
a first SL PRS configuration configured for the first terminal device to send an SL PRS; or
a first SL PRS configuration configured for a third terminal device to send an SL PRS, in which the third terminal device is any terminal device in a positioning assistance terminal device set other than the first terminal device and a fourth terminal device.

Optionally, in an embodiment of the present disclosure, sending the first SL PRS configuration to the first terminal device includes:
receiving a second SL PRS configuration sent by the first terminal device; and
determining the first SL PRS configuration and sending the first SL PRS configuration to the first terminal device based on the second SL PRS configuration.

Optionally, in an embodiment of the present disclosure, the first SL PRS configuration includes at least one of:
a periodic first SL PRS configuration;
a semi-persistent first SL PRS configuration; or
a non-periodic first SL PRS configuration.

In another aspect, embodiments of the present disclosure provide a method for negotiating a sidelink positioning reference signal (SL PRS) configuration, which is performed by a first terminal device and includes:
receiving a first SL PRS configuration sent by a first device. The first SL PRS configuration is configured for an SL positioning.

Optionally, in an embodiment of the present disclosure, receiving the first SL PRS configuration sent by the first device includes:
sending a second SL PRS configuration to the first device; and
receiving a first SL PRS configuration sent by the first device based on the second SL PRS configuration.

In a yet another aspect, embodiments of the present disclosure provide an apparatus for negotiating an SL PRS configuration, which is arranged on a first device side and includes:
a determining module configured to negotiate with a second device to determine a first SL PRS configuration, in which the first SL PRS configuration is configured for an SL positioning; and
a sending module configured to send the first SL PRS configuration to a first terminal device in response to satisfying a preset condition.

In a yet another aspect, embodiments of the present disclosure provide an apparatus, which is arranged on a first terminal device side and includes:
a receiving module configured to receive a first SL PRS configuration sent by a first device. The first SL PRS configuration is configured for an SL positioning.

In a yet another aspect, embodiments of the present disclosure provide a first device, which includes: a processor, and a memory having stored therein a computer program. The processor is configured to execute the computer program stored in the memory to cause the device to perform the method provided in embodiments of the one aspect.

In a yet another aspect, embodiments of the present disclosure provide a first terminal device, which includes: a processor, and a memory having stored therein a computer program. The processor is configured to execute the computer program stored in the memory to cause the device to perform the method provided in embodiments of the another aspect.

In a yet another aspect, embodiments of the present disclosure provide a communication device, which includes: a processor, and an interface circuit;
the interface circuit is configured to receive code instructions and transmit the code instructions to the processor, and
the processor is configured to run the code instructions to perform the method provided in embodiments of the one aspect.

In a yet another aspect, embodiments of the present disclosure provide a communication device, which includes: a processor, and an interface circuit;
the interface circuit is configured to receive code instructions and transmit the code instructions to the processor, and
the processor is configured to run the code instructions to perform the method provided in embodiments of the one aspect.

In a yet another aspect, embodiments of the present disclosure provide a communication device, which includes: a processor, and an interface circuit;
the interface circuit is configured to receive code instructions and transmit the code instructions to the processor, and
the processor is configured to run the code instructions to perform the method provided in embodiments of the another aspect.

In a yet another aspect, embodiments of the present disclosure provide a computer-readable storage medium, which is configured to store instructions that, when executed, cause the method provided in embodiments of the one aspect to be implemented.

In a yet another aspect, embodiments of the present disclosure provide a computer-readable storage medium, which is configured to store instructions that, when executed, cause the method provided in embodiments of the another aspect to be implemented.

In a yet another aspect, embodiments of the present disclosure provide a computer-readable storage medium, which is configured to store instructions that, when executed, cause the method provided in embodiments of the another aspect to be implemented.

In summary, in embodiments of the present disclosure, the second device is negotiated with to determine the first SL PRS configuration, and the first SL PRS configuration is configured for the SL positioning; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

### BRIEF DESCRIPTION OF THE DRAWINGS

The above and/or additional aspects and advantages of the present disclosure will become apparent and more readily appreciated from the following descriptions of embodiments made with reference to the accompanying drawings, in which:
FIG. 1 is an example schematic diagram of a method for negotiating an SL PRS configuration provided by an embodiment of the present disclosure;
FIG. 2 is a schematic flowchart of a method for negotiating an SL PRS configuration provided by an embodiment of the present disclosure;
FIG. 3 is a schematic flowchart of a method for negotiating an SL PRS configuration provided by another embodiment of the present disclosure;
FIG. 4 is a schematic flowchart of a method for negotiating an SL PRS configuration provided by yet another embodiment of the present disclosure;
FIG. 5 is a schematic flowchart of a method for negotiating an SL PRS configuration provided by a further embodiment of the present disclosure;
FIG. 6 is a schematic flowchart of a method for negotiating an SL PRS configuration provided by a further embodiment of the present disclosure;
FIG. 7 is a schematic flowchart of a method for negotiating an SL PRS configuration provided by a further embodiment of the present disclosure;
FIG. 8 is a schematic flowchart of a method for negotiating an SL PRS configuration provided by a further embodiment of the present disclosure;
FIG. 9 is a schematic flowchart of a method for negotiating an SL PRS configuration provided by a further embodiment of the present disclosure;
FIG. 10 is a schematic flowchart of a method for negotiating an SL PRS configuration provided by a further embodiment of the present disclosure;
FIG. 11 is a schematic flowchart of a method for negotiating an SL PRS configuration provided by a further embodiment of the present disclosure;
FIG. 12 is a schematic flowchart of a method for negotiating an SL PRS configuration provided by a further embodiment of the present disclosure;
FIG. 13 is a schematic flowchart of a method for negotiating an SL PRS configuration provided by a further embodiment of the present disclosure;
FIG. 14 is a schematic flowchart of a method for negotiating an SL PRS configuration provided by a further embodiment of the present disclosure;
FIG. 15 is a schematic flowchart of a method for negotiating an SL PRS configuration provided by a further embodiment of the present disclosure;
FIG. 16 is a schematic flowchart of a method for negotiating an SL PRS configuration provided by a further embodiment of the present disclosure;
FIG. 17 is a schematic flowchart of a method for negotiating an SL PRS configuration provided by a further embodiment of the present disclosure;
FIG. 18 is a schematic block diagram of an apparatus for negotiating an SL PRS configuration provided by a further embodiment of the present disclosure;
FIG. 19 is a schematic block diagram of an apparatus for negotiating an SL PRS configuration provided by a further embodiment of the present disclosure;
FIG. 20 is a block diagram of a terminal device provided by an embodiment of the present disclosure; and
FIG. 21 is a block diagram of a network-side device provided by an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of devices and methods consistent with some aspects of embodiments of the present disclosure as recited in the appended claims.

Terms used herein in embodiments of the present disclosure are only for the purpose of describing specific embodiments, but should not be construed to limit embodiments of the present disclosure. As used in embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

The network elements or network functions involved in embodiments of the present disclosure may be implemented by independent hardware devices or by a software in hardware devices, which is not limited in embodiments of the present disclosure.

A positioning based on a sidelink link between a terminal device (also called a user equipment (UE)) and the UE includes an absolute positioning, a relative positioning, and a ranging. The absolute positioning is to determine absolute coordinates of the UE, the relative positioning is to determine coordinates of the UE relative to a reference point, and the ranging is to determine a distance and/or angle of the UE relative to the reference point. The ranging usually refers to perform a ranging only between two UEs, but the absolute positioning and the relative positioning may involve a plurality of assistance UEs to participate in the positioning.

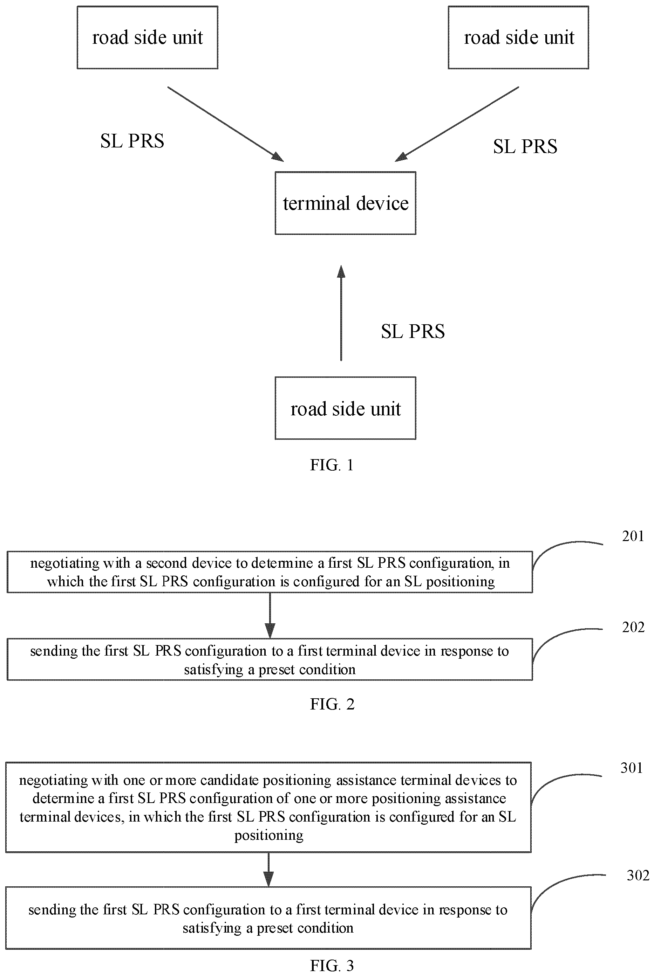

FIG. 1 shows an example schematic diagram of a method for negotiating an SL PRS configuration provided by an embodiment of the present disclosure. As shown in FIG. 1, taking a positioning manner based on a DL-TDOA as an example, a plurality of road side units (RSUs) may be arranged on a road side, and each road side unit may, for example, correspond to fixed position information. A UE, by measuring positioning signals sent by a plurality of road side units via a sidelink link, may determine a specific position of the UE relative to the RSUs based on the positioning signals, and the plurality of RSUs may, for example, be greater than or equal to three. For example, since a positioning signal includes position information of a road side unit, the UE may, for example, measure arrival time differences of three positioning signals sent by three road side units. Based on the arrival time differences of the three positioning signals and position information of each road side unit, the UE may determine position information of the UE, or position information of the UE relative to a certain road side unit.

In addition to the DL-TDOA, a positioning solution further includes an uplink time difference of arrival (UL-TDOA), multiple round trip time (multiple RTT), an angle-of-arrival (AOA) or an angle-of-departure (AOD), a carrier phase positioning, etc. A positioning result is a relative positioning in a case that the positioning result is not converted into absolute position coordinates based on absolute position information such as a global positioning system (GPS) of the RSUs. On the contrary, it is an absolute positioning. The RSU involved in the relative positioning or the absolute positioning is a positioning assistance UE.

In an embodiment of the present disclosure, in a case that a positioning involves only two UEs, the two UEs are each other's positioning assistance UEs.

Also, in an embodiment of the present disclosure, different types of positioning assistance UEs, such as an RSU type of the positioning assistance UEs, are provided. The RSU type of the positioning assistance UEs belongs to an infrastructure, which may provide positioning services by cooperating with other RSUs. For example, an ordinary UE may also be used as a positioning assistance UE, but it is difficult for it to assist in providing the positioning services together with other UEs. In addition, some positioning assistance UEs have position information such as a GPS, which may assist other UEs in the absolute positioning. Also, some other positioning assistance UEs may not have the position information such as the GPS.

A method and apparatus for negotiating an SL PRS configuration, a device and a storage medium provided by embodiments of the present disclosure will be introduced in detail below with reference to the accompanying drawings.

FIG. 2 is a schematic flowchart of a method for negotiating an SL PRS configuration provided by an embodiment of the present disclosure, which is performed by a first device. As shown in FIG. 2, the method may include the following steps.

In step 201, a second device is negotiated with to determine a first SL PRS configuration. The first SL PRS configuration is configured for an SL positioning.

In step 202, the first SL PRS configuration is sent to a first terminal device in response to satisfying a preset condition.

It should be noted that, in an embodiment of the present disclosure, the terminal device may refer to a device that provides voice and/or data connectivity to a user. The terminal device may communicate with one or more core networks via a radio access network (RAN). The terminal device may be an Internet of Things terminal, such as a sensor device, a mobile phone (or referred to as a "cellular" phone), and a computer with an Internet of Things terminal. For example, it may be a fixed, portable, pocket-sized, handheld, built-in computer or vehicle-mounted apparatus. For example, it may be a station (STA), a subscriber unit, a subscriber station, a mobile station, a mobile, a remote station, an access point, a remote terminal, an access terminal, a user terminal or a user agent. Alternatively, the terminal device may also be a device of an unmanned aerial vehicle. Alternatively, the terminal device may also be a vehicle-mounted device, for example, a driving computer with a wireless communication function, or a wireless terminal externally connected with a driving computer. Alternatively, the terminal device may also be a roadside device, for example, a street lamp, a signal lamp or other roadside devices with a wireless communication function.

In an embodiment of the present disclosure, the first terminal device refers to a device to be positioned, and the first SL PRS configuration may, for example, include time-frequency resource position information of an SL PRS. That is, in a case that the first terminal device receives the first SL PRS configuration, the first terminal device may use a time-frequency resource in the first SL PRS configuration to receive a positioning reference signal, and the first terminal device may determine position information of the first terminal device based on the positioning reference signal.

Also, in an embodiment of the present disclosure, the first device does not specifically refer to a certain fixed device. The first device may include, for example, at least one of a second terminal device, a network-side device, and an LMF. The network-side device may be, for example, a base station. The second terminal device may be, for example, a device that negotiates with the second device to determine the first SL PRS configuration. The second terminal device may be, for example, an infrastructure terminal device, the second terminal device may be, for example, a positioning assistance terminal device, and the second terminal device may, for example, provide a positioning function.

Also, in an embodiment of the present disclosure, the second device does not specifically refer to a certain fixed device. The second device may include, for example, at least one of a network-side device, an LMF, and a candidate positioning assistance terminal device. The second device and the first device are not a same type of devices at the same time. For example, the second device may be, for example, the LMF in a case that the first device is the second terminal device. For example, the second device may be, for example, the candidate positioning assistance terminal device in a case that the first device is the LMF.

Also, in an embodiment of the present disclosure, the first SL PRS configuration is configured for the SL positioning. Specifically, the first SL PRS configuration is configured for the first terminal device to perform the SL positioning, that is, to determine the position information of the first terminal device.

In an embodiment of the present disclosure, negotiating with the second device to determine the first SL PRS configuration includes:
negotiating with one or more candidate positioning assistance terminal devices to determine a first SL PRS configuration of one or more positioning assistance terminal devices.

Also, in an embodiment of the present disclosure, negotiating with the one or more candidate positioning assistance terminal devices to determine the first SL PRS configuration of the one or more positioning assistance terminal devices includes:
sending an SL PRS configuration request to the one or more candidate positioning assistance terminal devices; and
receiving a first SL PRS configuration sent by the one or more candidate positioning assistance terminal devices for the SL PRS configuration request.

For example, in an embodiment of the present disclosure, negotiating with the one or more candidate positioning assistance terminal devices to determine the first SL PRS configuration of the one or more positioning assistance terminal devices includes:
sending a first SL PRS configuration to the one or more candidate positioning assistance terminal devices; and
receiving confirmation information sent by the one or more candidate positioning assistance terminal devices for the first SL PRS configuration.

Also, in an embodiment of the present disclosure, negotiating with the one or more candidate positioning assistance terminal devices to determine the first SL PRS configuration of the one or more positioning assistance terminal devices includes:
sending an SL PRS configuration request to a master positioning assistance terminal device in the one or more candidate positioning assistance terminal devices; and
receiving a first SL PRS configuration sent by the master positioning assistance terminal device for the SL PRS configuration request.

Furthermore, in an embodiment of the present disclosure, the first device includes a second terminal device, the method is performed by the second terminal device, and the preset condition includes at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

For example, in an embodiment of the present disclosure, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

For example, in an embodiment of the present disclosure, the third terminal device includes at least one of:
a master positioning assistance terminal device; or
a terminal device establishing an SL connection with the first terminal device.

Also, in an embodiment of the present disclosure, negotiating with the second device to determine the first SL PRS configuration includes:
negotiating with the network-side device or the LMF to determine a first SL PRS configuration of one or more positioning assistance terminal devices.

Also, in an embodiment of the present disclosure, negotiating with the network-side device or the LMF to determine the first SL PRS configuration of the one or more positioning assistance terminal devices includes:
sending an SL PRS configuration request to the network side device, in which the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the network-side device for the SL PRS configuration request.

Furthermore, in an embodiment of the present disclosure, negotiating with the network-side device or the LMF to determine the first SL PRS configuration of the one or more positioning assistance terminal devices includes:
sending an SL PRS configuration request to the LMF, in which the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the LMF for the SL PRS configuration request.

Also, in an embodiment of the present disclosure, the method further includes at least one of:
negotiating with a candidate positioning assistance terminal device to determine the first SL PRS configuration via a sidelink LPP message;
negotiating with a candidate positioning assistance terminal device to determine the first SL PRS configuration via a PC5-S message; or
negotiating with a candidate positioning assistance terminal device to determine the first SL PRS configuration via an RRC message.

Also, in an embodiment of the present disclosure, the sidelink LPP message includes request assistance information of a sidelink LPP and/or provide assistance information of a sidelink LPP.

Furthermore, in an embodiment of the present disclosure, the RRC message includes an SL RRC reconfiguration message.

Also, in an embodiment of the present disclosure, the first device includes a network-side device, the method is performed by the network-side device, and negotiating with the second device to determine the first SL PRS configuration includes:
negotiating with an LMF to determine a first SL PRS configuration of one or more positioning assistance terminal devices.

Furthermore, in an embodiment of the present disclosure, negotiating with the LMF to determine the first SL PRS configuration of the one or more positioning assistance terminal devices includes:
sending an SL PRS configuration request to the LMF, in which the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the LMF for the SL PRS configuration request.

Also, in an embodiment of the present disclosure, the first device includes an LMF, the method is performed by the LMF, and negotiating with the second device to determine the first SL PRS configuration includes:
negotiating with a network-side device to determine a first SL PRS configuration of one or more positioning assistance terminal devices.

Furthermore, in an embodiment of the present disclosure, negotiating with the network-side device to determine the first SL PRS configuration of the one or more positioning assistance terminal devices includes:
sending an SL PRS configuration request to the network-side device, in which the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the network-side device for the SL PRS configuration request.

Also, in an embodiment of the present disclosure, the method further includes:
negotiating the first SL PRS configuration with a terminal device via an LPP message.

Also, in an embodiment of the present disclosure, the LPP message includes request assistance information of an LPP and/or provide assistance information of an LPP.

For example, in an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

For example, in an embodiment of the present disclosure, the fourth terminal device includes at least one of:
a positioning assistance terminal device;
a master positioning assistance terminal device; or
a terminal device establishing a communication connection with the network-side device or the LMF.

For example, in an embodiment of the present disclosure, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

Also, in an embodiment of the present disclosure, sending the first SL PRS configuration to the first terminal device includes:
receiving a second SL PRS configuration sent by the first terminal device; and
determining the first SL PRS configuration and sending the first SL PRS configuration to the first terminal device based on the second SL PRS configuration.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the second device is negotiated with to determine the first SL PRS configuration, and the first SL PRS configuration is configured for the SL positioning; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

FIG. 3 is a schematic flowchart of a method for negotiating an SL PRS configuration provided by an embodiment of the present disclosure, which is performed by a first device. As shown in FIG. 3, the method may include the following steps.

In step 301, one or more candidate positioning assistance terminal devices are negotiated with to determine a first SL PRS configuration of one or more positioning assistance terminal devices. The first SL PRS configuration is configured for an SL positioning.

In step 302, the first SL PRS configuration is sent to a first terminal device in response to satisfying a preset condition.

In an embodiment of the present disclosure, the first device may include, for example, at least one of a second terminal device, a network-side device and an LMF.

For example, in an embodiment of the present disclosure, the first device may be, for example, the second terminal device. The second terminal device, for example, negotiates with the one or more candidate positioning assistance terminal devices to determine the first SL PRS configuration of the one or more positioning assistance terminal devices. The second terminal device may send the first SL PRS configuration to the first terminal device in response to satisfying the preset condition.

For example, in an embodiment of the present disclosure, the first device may be, for example, the network-side device. The network-side device, for example, negotiates with the one or more candidate positioning assistance terminal devices to determine the first SL PRS configuration of the one or more positioning assistance terminal devices. The network-side device may send the first SL PRS configuration to the first terminal device in response to satisfying the preset condition.

For example, in an embodiment of the present disclosure, the first device may be, for example, the LMF. The LMF, for example, negotiates with the one or more candidate positioning assistance terminal devices to determine the first SL PRS configuration of the one or more positioning assistance terminal devices. The LMF may send the first SL PRS configuration to the first terminal device in response to satisfying the preset condition.

In an embodiment of the present disclosure, in a case that the first device changes, the preset condition and the first SL PRS configuration may also change accordingly.

In an embodiment of the present disclosure, in a case that the first device includes the second terminal device, the preset condition includes at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

For example, in an embodiment of the present disclosure, in a case that the first device includes the second terminal device, the preset condition may include at least one of the above, that is, the preset condition may be one of the above, or a combination of multiple ones. For example, the preset condition may only be receiving the positioning-related assistance information request sent by the first terminal device, or the preset condition may also be receiving the positioning-related assistance information request sent by the first terminal device and determining to send the first SL PRS configuration to the first terminal device.

For example, in an embodiment of the present disclosure, in a case that the first device includes the second terminal device, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

Also, in an embodiment of the present disclosure, in a case that the first device includes the second terminal device, the third terminal device includes at least one of:
a master positioning assistance terminal device; or
a terminal device establishing an SL connection with the first terminal device.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In an embodiment of the present disclosure, the second terminal device may be, for example, an infrastructure UE, which is a type of UE that specifically provides a positioning function, such as a road side unit (RSU), or other UEs that may provide a positioning service. A UE that provides the positioning service is, for example, a UE with global navigation satellite system (GNSS) position information. The infrastructure UE may be classified into a master infrastructure or a secondary infrastructure. The second terminal device may be, for example, a UE B, and the UE B may be, for example, the master infrastructure or the secondary infrastructure.

In summary, in embodiments of the present disclosure, the one or more candidate positioning assistance terminal devices are negotiated with to determine the first SL PRS configuration of the one or more positioning assistance terminal devices, and the first SL PRS configuration is configured for the SL positioning; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure specifically discloses a solution for negotiating with the one or more candidate positioning assistance terminal devices to determine the first SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

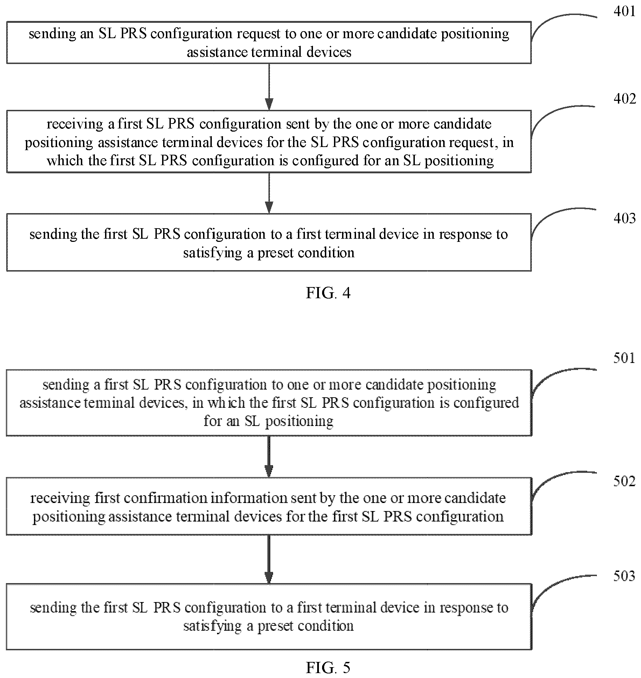

FIG. 4 is a schematic flowchart of a method for negotiating an SL PRS configuration provided by an embodiment of the present disclosure, which is performed by a first device. As shown in FIG. 4, the method may include the following steps.

In step 401, an SL PRS configuration request is sent to one or more candidate positioning assistance terminal devices.

In step 402, a first SL PRS configuration sent by the one or more candidate positioning assistance terminal devices for the SL PRS configuration request is received. The first SL PRS configuration is configured for an SL positioning.

In step 403, the first SL PRS configuration is sent to a first terminal device in response to satisfying a preset condition.

For example, in an embodiment of the present disclosure, the first device may be, for example, a second terminal device. The second terminal device may, for example, send the SL PRS configuration request to the one or more candidate positioning assistance terminal devices. The one or more candidate positioning assistance terminal devices may feed back the first SL PRS configuration to the second terminal device based on the SL PRS configuration request. The second terminal device may receive the first SL PRS configuration sent by the one or more candidate positioning assistance terminal devices for the SL PRS configuration request. The second terminal device may send the first SL PRS configuration to the first terminal device in response to satisfying the preset condition.

For example, in an embodiment of the present disclosure, the first device may be, for example, a network-side device. The network-side device may, for example, send the SL PRS configuration request to the one or more candidate positioning assistance terminal devices. The one or more candidate positioning assistance terminal devices may feed back the first SL PRS configuration to the network-side device based on the SL PRS configuration request. The network-side device may receive the first SL PRS configuration sent by the one or more candidate positioning assistance terminal devices for the SL PRS configuration request. The network-side device may send the first SL PRS configuration to the first terminal device in response to satisfying the preset condition.

For example, in an embodiment of the present disclosure, the first device may be, for example, an LMF. The LMF may, for example, send the SL PRS configuration request to the one or more candidate positioning assistance terminal devices. The one or more candidate positioning assistance terminal devices may feed back the first SL PRS configuration to the LMF based on the SL PRS configuration request. The LMF may receive the first SL PRS configuration sent by the one or more candidate positioning assistance terminal devices for the SL PRS configuration request. The LMF may send the first SL PRS configuration to the first terminal device in response to satisfying the preset condition.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the SL PRS configuration request is sent to the one or more candidate positioning assistance terminal devices; the first SL PRS configuration sent by the one or more candidate positioning assistance terminal devices for the SL PRS configuration request is received, and the first SL PRS configuration is configured for the SL positioning; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for negotiating with the one or more candidate positioning assistance terminal devices to determine the first SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

FIG. 5 is a schematic flowchart of a method for negotiating an SL PRS configuration provided by an embodiment of the present disclosure, which is performed by a first device. As shown in FIG. 5, the method may include the following steps.

In step 501, a first SL PRS configuration is sent to one or more candidate positioning assistance terminal devices. The first SL PRS configuration is configured for an SL positioning.

In step 502, confirmation information sent by the one or more candidate positioning assistance terminal devices for the first SL PRS configuration is received.

In step 503, the first SL PRS configuration is sent to a first terminal device in response to satisfying a preset condition.

For example, in an embodiment of the present disclosure, the first device may be, for example, a second terminal device. The second terminal device may, for example, send the first SL PRS configuration to the one or more candidate positioning assistance terminal devices. The one or more candidate positioning assistance terminal devices may feed back the confirmation information for the first SL PRS configuration to the second terminal device. The second terminal device may receive the confirmation information from the one or more candidate positioning assistance terminal devices for the first SL PRS configuration. The second terminal device may send the first SL PRS configuration to the first terminal device in response to satisfying the preset condition.

For example, in an embodiment of the present disclosure, the first device may be, for example, a network-side device. The network-side device may, for example, send the first SL PRS configuration to the one or more candidate positioning assistance terminal devices. The one or more candidate positioning assistance terminal devices may feed back the confirmation information for the first SL PRS configuration to the network-side device. The network-side device may receive the confirmation information from the one or more candidate positioning assistance terminal devices for the first SL PRS configuration. The network-side device may send the first SL PRS configuration to the first terminal device in response to satisfying the preset condition.

For example, in an embodiment of the present disclosure, the first device may be, for example, an LMF. The LMF may, for example, send the first SL PRS configuration to the one or more candidate positioning assistance terminal devices. The one or more candidate positioning assistance terminal devices may feed back the confirmation information for the first SL PRS configuration to the LMF. The LMF may receive the confirmation information from the one or more candidate positioning assistance terminal devices for the first SL PRS configuration. The LMF may send the first SL PRS configuration to the first terminal device in response to satisfying the preset condition.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the first SL PRS configuration is sent to the one or more candidate positioning assistance terminal devices, and the first SL PRS configuration is configured for the SL positioning; the confirmation information sent by the one or more candidate positioning assistance terminal devices for the first SL PRS configuration is received; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for negotiating with the one or more candidate positioning assistance terminal devices to determine the first SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

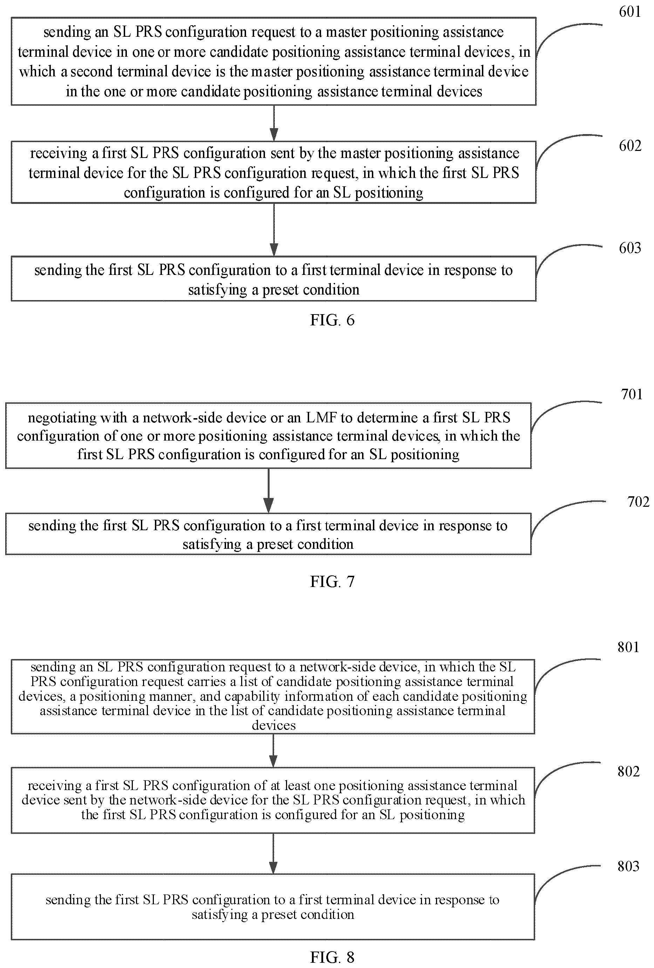

FIG. 6 is a schematic flowchart of a method for negotiating an SL PRS configuration provided by an embodiment of the present disclosure, which is performed by a first terminal device. As shown in FIG. 6, the method may include the following steps.

In step 601, an SL PRS configuration request is sent to a master positioning assistance terminal device in one or more candidate positioning assistance terminal devices.

In step 602, a first SL PRS configuration sent by the master positioning assistance terminal device for the SL PRS configuration request is received. The first SL PRS configuration is configured for an SL positioning.

In step 603, the first SL PRS configuration is sent to a first terminal device in response to satisfying a preset condition.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

For example, in an embodiment of the present disclosure, the first device may be, for example, a second terminal device. The second terminal device may, for example, send the SL PRS configuration request to the master positioning assistance terminal device in the one or more candidate positioning assistance terminal devices. The master positioning assistance terminal device may feed back the first SL PRS configuration to the second terminal device based on the SL PRS configuration request. The second terminal device may receive the first SL PRS configuration sent by the master positioning assistance terminal device for the SL PRS configuration request. The second terminal device may send the first SL PRS configuration to the first terminal device in response to satisfying the preset condition.

For example, in an embodiment of the present disclosure, the first device may be, for example, a network-side device. The network-side device may, for example, send the SL PRS configuration request to the master positioning assistance terminal device in the one or more candidate positioning assistance terminal devices. The master positioning assistance terminal device may feed back the first SL PRS configuration to the network-side device based on the SL PRS configuration request. The network-side device may receive the first SL PRS configuration sent by the master positioning assistance terminal device for the SL PRS configuration request. The network-side device may send the first SL PRS configuration to the first terminal device in response to satisfying the preset condition.

For example, in an embodiment of the present disclosure, the first device may be, for example, an LMF. The LMF may, for example, send the SL PRS configuration request to the master positioning assistance terminal device in the one or more candidate positioning assistance terminal devices. The master positioning assistance terminal device may feed back the first SL PRS configuration to the LMF based on the SL PRS configuration request. The LMF may receive the first SL PRS configuration sent by the master positioning assistance terminal device for the SL PRS configuration request. The LMF may send the first SL PRS configuration to the first terminal device in response to satisfying the preset condition.

In summary, in embodiments of the present disclosure, the SL PRS configuration request is sent to the master positioning assistance terminal device in the one or more candidate positioning assistance terminal devices; the first SL PRS configuration sent by the master positioning assistance terminal device for the SL PRS configuration request is received, and the first SL PRS configuration is configured for the SL positioning; and the first SL PRS configuration is sent to the first terminal device in response to satisfying the preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for negotiating with the master positioning assistance terminal device to determine the first SL PRS configuration. The present disclosure provides a processing method for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

FIG. 7 is a schematic flowchart of a method for negotiating an SL PRS configuration provided by an embodiment of the present disclosure. A first device includes a second terminal device, and the method is performed by the second terminal device. As shown in FIG. 7, the method may include the following steps.

In step 701, a network-side device or an LMF is negotiated with to determine a first SL PRS configuration of one or more positioning assistance terminal devices. The first SL PRS configuration is configured for an SL positioning.

In step 702, the first SL PRS configuration is sent to a first terminal device in response to satisfying a preset condition.

In an embodiment of the present disclosure, the first device may be, for example, the second terminal device. The second device may be, for example, the network-side device or the LMF. The second terminal device may negotiate with the network-side device or the LMF to determine the first SL PRS configuration of the one or more positioning assistance terminal devices. For example, the second terminal device may negotiate with the network-side device to determine the first SL PRS configuration of the one or more positioning assistance terminal devices. For example, the second terminal device may negotiate with the LMF to determine the first SL PRS configuration of the one or more positioning assistance terminal devices.

Furthermore, in an embodiment of the present disclosure, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

Furthermore, in an embodiment of the present disclosure, the third terminal device includes at least one of:
a master positioning assistance terminal device; or
a terminal device establishing an SL connection with the first terminal device.

Furthermore, in an embodiment of the present disclosure, the preset condition may include at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

In summary, in embodiments of the present disclosure, the network-side device or the LMF is negotiated with to determine the first SL PRS configuration of the one or more positioning assistance terminal devices, and the first SL PRS configuration is configured for the SL positioning; and the first SL PRS configuration is sent to the first terminal device in response to satisfying the preset condition. In embodiments of the present disclosure, the network-side device or the LMF may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the second terminal device to negotiate with the network-side device or the LMF to determine the first SL PRS configuration. The present disclosure provides a processing method for a scenario of "SL PRS configuration negotiation" to provide a negotiation mechanism for the SL PRS configuration between the second terminal device and the network-side device or the LMF, which reduces the situation where the SL PRS configuration cannot be determined, and improves an accuracy of an SL PRS configuration determination, thereby improving an accuracy of a position determination.

FIG. 8 is a schematic flowchart of a method for negotiating an SL PRS configuration provided by an embodiment of the present disclosure. A first device includes a second terminal device, and the method is performed by the second terminal device. As shown in FIG. 8, the method may include the following steps.

In step 801, an SL PRS configuration request is sent to a network-side device. The SL PRS configuration request carries a list of candidate positioning assistance terminal devices, a positioning manner, and capability information of each candidate positioning assistance terminal device in the list of candidate positioning assistance terminal devices.

In step 802, a first SL PRS configuration of at least one positioning assistance terminal device sent by the network-side device for the SL PRS configuration request is received. The first SL PRS configuration is configured for an SL positioning.

In step 803, the first SL PRS configuration is sent to a first terminal device in response to satisfying a preset condition.

In an embodiment of the present disclosure, the positioning manner includes, but is not limited to, one or more of an uplink time of arrival (UL-TOA), a downlink time of arrival (DL-TOA), an angle-of-arrival (AOA), an angle-of-departure (AOD), a round trip time (RTT), etc.

Also, in an embodiment of the present disclosure, the list of candidate positioning assistance terminal devices refers to a list including at least one candidate positioning assistance terminal device. The list of candidate positioning assistance terminal devices does not specifically refer to a certain fixed list. For example, in a case that a number of terminal devices included in the list of candidate positioning assistance terminal devices changes, the list of candidate positioning assistance terminal devices may also change accordingly.

In an embodiment of the present disclosure, the first device may be, for example, the second terminal device. The second device may be, for example, the network-side device. The second terminal device sends the SL PRS configuration request to the network-side device, and the SL PRS configuration request carries the list of candidate positioning assistance terminal devices, the positioning manner, and the capability information of each candidate positioning assistance terminal device in the list of candidate positioning assistance terminal devices. The second terminal device may receive the first SL PRS configuration of the at least one positioning assistance terminal device sent by the network-side device for the SL PRS configuration request. The second terminal device may send the first SL PRS configuration to the first terminal device in response to satisfying the preset condition.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

Furthermore, in an embodiment of the present disclosure, before the second terminal device receives the first SL PRS configuration of the at least one positioning assistance terminal device sent by the network-side device for the SL PRS configuration request, the network-side device may request the first SL PRS configuration from an LMF or a positioning assistance terminal device. The network-side device may send the first SL PRS configuration to the second terminal device in a case that the network-side device receives the first SL PRS configuration fed back by the LMF or the positioning assistance terminal device.

In summary, in embodiments of the present disclosure, the SL PRS configuration request is sent to the network-side device, and the SL PRS configuration request carries the list of candidate positioning assistance terminal devices, the positioning manner, and the capability information of each candidate positioning assistance terminal device in the list of candidate positioning assistance terminal devices; the first SL PRS configuration of the at least one positioning assistance terminal device sent by the network-side device for the SL PRS configuration request is received, and the first SL PRS configuration is configured for the SL positioning; and the first SL PRS configuration is sent to the first terminal device in response to satisfying the preset condition. In embodiments of the present disclosure, the network-side device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the second terminal device to negotiate with the network-side device to determine the first SL PRS configuration. The present disclosure provides a processing method for a scenario of "SL PRS configuration negotiation" to provide a negotiation mechanism for the SL PRS configuration between the second terminal device and the network-side device, which reduces the situation where the SL PRS configuration cannot be determined, and improves an accuracy of an SL PRS configuration determination, thereby improving an accuracy of a position determination.

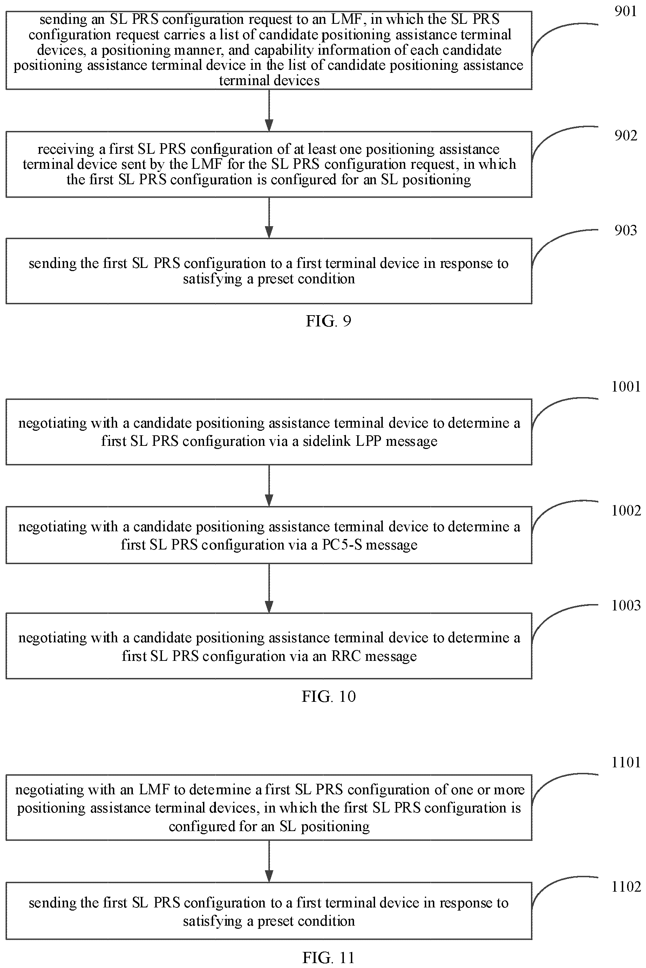

FIG. 9 is a schematic flowchart of a method for negotiating an SL PRS configuration provided by an embodiment of the present disclosure. A first device includes a second terminal device, and the method is performed by the second terminal device. As shown in FIG. 9, the method may include the following steps.

In step 901, an SL PRS configuration request is sent to an LMF. The SL PRS configuration request carries a list of candidate positioning assistance terminal devices, a positioning manner, and capability information of each candidate positioning assistance terminal device in the list of candidate positioning assistance terminal devices.

In step 902, a first SL PRS configuration of at least one positioning assistance terminal device sent by the LMF for the SL PRS configuration request is received. The first SL PRS configuration is configured for an SL positioning.

In step 903, the first SL PRS configuration is sent to a first terminal device in response to satisfying a preset condition.

In an embodiment of the present disclosure, the first device may be, for example, the second terminal device. The second device may be, for example, the LMF. The second terminal device sends the SL PRS configuration request to the LMF, and the SL PRS configuration request carries the list of candidate positioning assistance terminal devices, the positioning manner, and the capability information of each candidate positioning assistance terminal device in the list of candidate positioning assistance terminal devices. The second terminal device may receive the first SL PRS configuration of the at least one positioning assistance terminal device sent by the LMF for the SL PRS configuration request. The second terminal device may send the first SL PRS configuration to the first terminal device in response to satisfying the preset condition.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In an embodiment of the present disclosure, the positioning manner includes, but is not limited to, one or more of a UL-TOA, a DL-TOA, an AOA, an AOD, an RTT, etc.

Also, in an embodiment of the present disclosure, the list of candidate positioning assistance terminal devices refers to a list including at least one candidate positioning assistance terminal device. The list of candidate positioning assistance terminal devices does not specifically refer to a certain fixed list. For example, in a case that a number of terminal devices included in the list of candidate positioning assistance terminal devices changes, the list of candidate positioning assistance terminal devices may also change accordingly.

Furthermore, in an embodiment of the present disclosure, before the second terminal device receives the first SL PRS configuration of the at least one positioning assistance terminal device sent by the LMF for the SL PRS configuration request, the LMF may request the first SL PRS configuration from a network-side device or a positioning assistance terminal device. The LMF may send the first SL PRS configuration to the second terminal device in a case that the LMF receives the first SL PRS configuration fed back by the network-side device or the positioning assistance terminal device.

In an embodiment of the present disclosure, the LMF may request the first SL PRS configuration from base stations corresponding to different service cells in a case that service cells of the positioning assistance terminal device are different.

For example, in an embodiment of the present disclosure, before the LMF sends the first SL PRS configuration of the at least one positioning assistance terminal device for the SL PRS configuration request to the first terminal device, the LMF may send the first SL PRS configuration to the at least one positioning assistance terminal device. The LMF may send the first SL PRS configuration to the second terminal device in a case that the LMF receives the confirmation information from the at least one positioning assistance terminal device for the first SL PRS configuration.

In summary, in embodiments of the present disclosure, the SL PRS configuration request is sent to the LMF, and the SL PRS configuration request carries the list of candidate positioning assistance terminal devices, the positioning manner, and the capability information of each candidate positioning assistance terminal device in the list of candidate positioning assistance terminal devices; the first SL PRS configuration of the at least one positioning assistance terminal device sent by the LMF for the SL PRS configuration request is received, and the first SL PRS configuration is configured for the SL positioning; and the first SL PRS configuration is sent to the first terminal device in response to satisfying the preset condition. In embodiments of the present disclosure, the LMF may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the second terminal device to negotiate with the LMF to determine the first SL PRS configuration. The present disclosure provides a processing method for a scenario of "SL PRS configuration negotiation" to provide a negotiation mechanism for the SL PRS configuration between the second terminal device and the LMF, which reduces the situation where the SL PRS configuration cannot be determined, and improves an accuracy of an SL PRS configuration determination, thereby improving an accuracy of a position determination.

FIG. 10 is a schematic flowchart of a method for negotiating an SL PRS configuration provided by an embodiment of the present disclosure. A first device includes a second terminal device, and the method is performed by the second terminal device. As shown in FIG. 10, the method may include the following steps.

The method may include at least one of the following steps, that is, steps 1001 to 1003 may be performed optionally.

In step 1001, a candidate positioning assistance terminal device is negotiated with to determine a first SL PRS configuration via a sidelink LPP message.

In step 1002, a candidate positioning assistance terminal device is negotiated with to determine a first SL PRS configuration via a PC5-S message.

In step 1003, a candidate positioning assistance terminal device is negotiated with to determine a first SL PRS configuration via an RRC message.

In an embodiment of the present disclosure, the first SL PRS configuration may be determined by negotiating between terminal devices via the sidelink LPP message, the PC5-S message or the RRC message.

In an embodiment of the present disclosure, the sidelink LPP message includes request assistance information of a sidelink LPP and/or provide assistance information of a sidelink LPP.

Also, in an embodiment of the present disclosure, the RRC message includes an SL RRC reconfiguration message.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the candidate positioning assistance terminal device is negotiated with to determine the first SL PRS configuration via the sidelink LPP message; the candidate positioning assistance terminal device is negotiated with to determine the first SL PRS configuration via the PC5-S message; and the candidate positioning assistance terminal device is negotiated with to determine the first SL PRS configuration via the RRC message. In embodiments of the present disclosure, the candidate positioning assistance terminal device may be negotiated with to determine the first SL PRS configuration via the sidelink LPP message, the PC5-S message or the RRC message, which reduces a situation where the SL PRS configuration cannot be determined and may provide a negotiation mechanism for the SL PRS configuration. The present disclosure provides a processing method for a scenario of "SL PRS configuration negotiation" to provide a negotiation mechanism for the SL PRS configuration between the second terminal device and the LMF, which reduces the situation where the SL PRS configuration cannot be determined, and improves an accuracy of an SL PRS configuration determination, thereby improving an accuracy of a position determination.

FIG. 11 is a schematic flowchart of a method for negotiating an SL PRS configuration provided by an embodiment of the present disclosure. A first device includes a network-side device, and the method is performed by the network-side device. As shown in FIG. 11, the method may include the following steps.

In step 1101, an LMF is negotiated with to determine a first SL PRS configuration of one or more positioning assistance terminal devices. The first SL PRS configuration is configured for an SL positioning.

In step 1102, the first SL PRS configuration is sent to a first terminal device in response to satisfying a preset condition.

In an embodiment of the present disclosure, the first device may be, for example, the network-side device. A second device may be, for example, the LMF. The network-side device may negotiate with the LMF to determine the first SL PRS configuration of the one or more positioning assistance terminal devices. The network-side device may send the first SL PRS configuration to the first terminal device in response to satisfying the preset condition.

In an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

The fourth terminal device refers to a terminal device that sends the positioning-related assistance information corresponding to the first terminal device to the network-side device or the LMF.

Also, in an embodiment of the present disclosure, the fourth terminal device includes at least one of:
a positioning assistance terminal device;
a master positioning assistance terminal device; or
a terminal device establishing a communication connection with the network-side device or the LMF.

Also, in an embodiment of the present disclosure, in a case that the first device includes the network-side device, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

In an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the LMF is negotiated with to determine the first SL PRS configuration of the one or more positioning assistance terminal devices, and the first SL PRS configuration is configured for the SL positioning; and the first SL PRS configuration is sent to the first terminal device in response to satisfying the preset condition. In embodiments of the present disclosure, the LMF may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the network-side device to negotiate with the LMF to determine the first SL PRS configuration. The present disclosure provides a processing method for a scenario of "SL PRS configuration negotiation" to provide a negotiation mechanism for the SL PRS configuration between the network-side device and the LMF, which reduces the situation where the SL PRS configuration cannot be determined, and improves an accuracy of an SL PRS configuration determination, thereby improving an accuracy of a position determination.

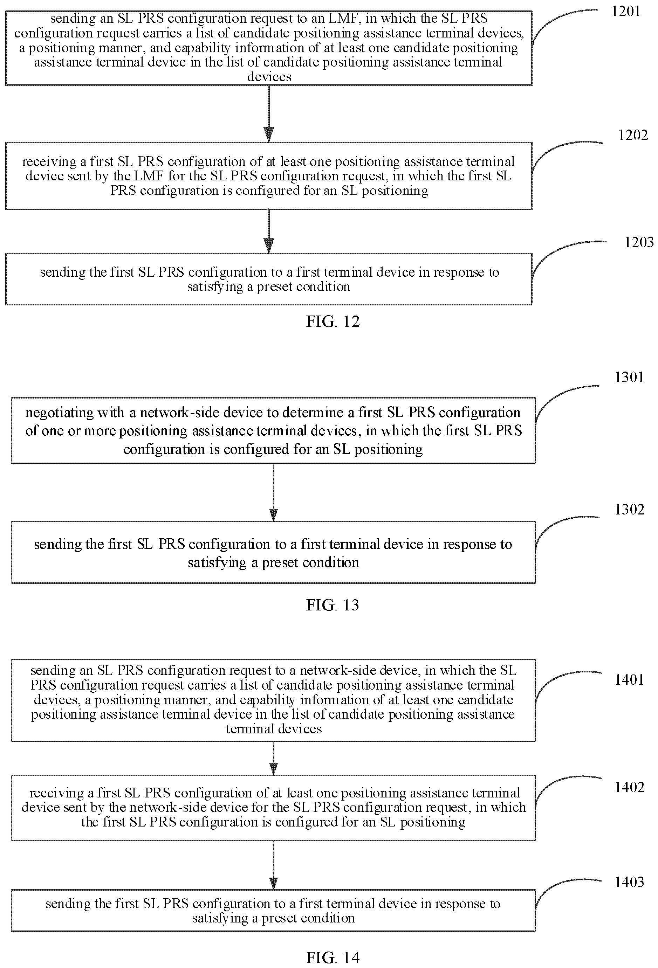

FIG. 12 is a schematic flowchart of a method for negotiating an SL PRS configuration provided by an embodiment of the present disclosure. A first device includes a network-side device, and the method is performed by the network-side device. As shown in FIG. 12, the method may include the following steps.

In step 1201, an SL PRS configuration request is sent to an LMF. The SL PRS configuration request carries a list of candidate positioning assistance terminal devices, a positioning manner, and capability information of at least one candidate positioning assistance terminal device in the list of candidate positioning assistance terminal devices.

In step 1202, a first SL PRS configuration of at least one positioning assistance terminal device sent by the LMF for the SL PRS configuration request is received. The first SL PRS configuration is configured for an SL positioning.

In step 1203, the first SL PRS configuration is sent to a first terminal device in response to satisfying a preset condition.

In an embodiment of the present disclosure, the first device may be, for example, the network-side device. A second device may be, for example, the LMF. The network-side device may send the SL PRS configuration request to the LMF, and the SL PRS configuration request carries the list of candidate positioning assistance terminal devices, the positioning manner, and the capability information of the at least one candidate positioning assistance terminal device in the list of candidate positioning assistance terminal devices. The network-side device may receive the first SL PRS configuration of the at least one positioning assistance terminal device sent by the LMF for the SL PRS configuration request. The network-side device may send the first SL PRS configuration to the first terminal device in response to satisfying the preset condition.

In an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

In an embodiment of the present disclosure, the fourth terminal device includes at least one of:
a positioning assistance terminal device;
a master positioning assistance terminal device; or
a terminal device establishing a communication connection with the network-side device or the LMF.

In an embodiment of the present disclosure, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

In summary, in embodiments of the present disclosure, the SL PRS configuration request is sent to the LMF, and the SL PRS configuration request carries the list of candidate positioning assistance terminal devices, the positioning manner, and the capability information of the at least one candidate positioning assistance terminal device in the list of candidate positioning assistance terminal devices; the first SL PRS configuration of the at least one positioning assistance terminal device sent by the LMF for the SL PRS configuration request is received, and the first SL PRS configuration is configured for the SL positioning; and the first SL PRS configuration is sent to the first terminal device in response to satisfying the preset condition. In embodiments of the present disclosure, the LMF may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the network-side device to negotiate with the LMF to determine the first SL PRS configuration. The present disclosure provides a processing method for a scenario of "SL PRS configuration negotiation" to provide a negotiation mechanism for the SL PRS configuration between the network-side device and the LMF, which reduces the situation where the SL PRS configuration cannot be determined, and improves an accuracy of an SL PRS configuration determination, thereby improving an accuracy of a position determination.

FIG. 13 is a schematic flowchart of a method for negotiating an SL PRS configuration provided by an embodiment of the present disclosure. A first device includes an LMF, and the method is performed by the LMF. As shown in FIG. 13, the method may include the following steps.

In step 1301, a network-side device is negotiated with to determine a first SL PRS configuration of one or more positioning assistance terminal devices. The first SL PRS configuration is configured for an SL positioning.

In step 1302, the first SL PRS configuration is sent to a first terminal device in response to satisfying a preset condition.

In an embodiment of the present disclosure, the first SL PRS configuration includes at least one of:
a periodic first SL PRS configuration;
a semi-persistent first SL PRS configuration; or
a non-periodic first SL PRS configuration.

In an embodiment of the present disclosure, the first device may be, for example, the LMF. A second device may be, for example, the network-side device. The LMF may negotiate with the network-side device to determine the first SL PRS configuration of the one or more positioning assistance terminal devices. The LMF may send the first SL PRS configuration to the first terminal device in response to satisfying the preset condition.

In an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

The fourth terminal device refers to a terminal device that sends the positioning-related assistance information corresponding to the first terminal device to the network-side device or the LMF.

Also, in an embodiment of the present disclosure, the fourth terminal device includes at least one of:
a positioning assistance terminal device;
a master positioning assistance terminal device; or
a terminal device establishing a communication connection with the network-side device or the LMF.

Also, in an embodiment of the present disclosure, in a case that the first device includes the LMF, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

In summary, in embodiments of the present disclosure, the network-side device is negotiated with to determine the first SL PRS configuration of the one or more positioning assistance terminal devices, and the first SL PRS configuration is configured for the SL positioning; and the first SL PRS configuration is sent to the first terminal device in response to satisfying the preset condition. In embodiments of the present disclosure, the network-side device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a solution for the LMF to negotiate with the network-side device to determine the first SL PRS configuration. The present disclosure provides a processing method for a scenario of "SL PRS configuration negotiation" to provide a negotiation mechanism for the SL PRS configuration between the LMF and the network-side device, which reduces the situation where the SL PRS configuration cannot be determined, and improves an accuracy of an SL PRS configuration determination, thereby improving an accuracy of a position determination.

FIG. 14 is a schematic flowchart of a method for negotiating an SL PRS configuration provided by an embodiment of the present disclosure. A first device includes an LMF, and the method is performed by the LMF. As shown in FIG. 14, the method may include the following steps.

In step 1401, an SL PRS configuration request is sent to a network-side device. The SL PRS configuration request carries a list of candidate positioning assistance terminal devices, a positioning manner, and capability information of at least one candidate positioning assistance terminal device in the list of candidate positioning assistance terminal devices.

In step 1402, a first SL PRS configuration of at least one positioning assistance terminal device sent by the network-side device for the SL PRS configuration request is received. The first SL PRS configuration is configured for an SL positioning.

In step 1403, the first SL PRS configuration is sent to a first terminal device in response to satisfying a preset condition.

In an embodiment of the present disclosure, the first device may be, for example, the LMF. A second device may be, for example, the network-side device. The LMF may send the SL PRS configuration request to the network-side device, and the SL PRS configuration request carries the list of candidate positioning assistance terminal devices, the positioning manner, and the capability information of the at least one candidate positioning assistance terminal device in the list of candidate positioning assistance terminal devices. The LMF may receive the first SL PRS configuration of the at least one positioning assistance terminal device sent by the network-side device for the SL PRS configuration request. The LMF may send the first SL PRS configuration to the first terminal device in response to satisfying the preset condition.

In an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

In an embodiment of the present disclosure, the fourth terminal device includes at least one of:
a positioning assistance terminal device;
a master positioning assistance terminal device; or
a terminal device establishing a communication connection with the network-side device or the LMF.

In an embodiment of the present disclosure, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

Also, in an embodiment of the present disclosure, the LMF negotiates the first SL PRS configuration with a terminal device via an LPP message.

Also, in an embodiment of the present disclosure, the LPP message includes request assistance information of an LPP and/or provide assistance information of an LPP.

Also, in an embodiment of the present disclosure, the first SL PRS configuration includes at least one of:
a periodic first SL PRS configuration;
a semi-persistent first SL PRS configuration; or
a non-periodic first SL PRS configuration.

In summary, in embodiments of the present disclosure, the SL PRS configuration request is sent to the network-side device, and the SL PRS configuration request carries the list of candidate positioning assistance terminal devices, the positioning manner, and the capability information of the at least one candidate positioning assistance terminal device in the list of candidate positioning assistance terminal devices; the first SL PRS configuration of the at least one positioning assistance terminal device sent by the network-side device for the SL PRS configuration request is received, and the first SL PRS configuration is configured for the SL positioning; and the first SL PRS configuration is sent to the first terminal device in response to satisfying the preset condition. In embodiments of the present disclosure, the network-side device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. An embodiment of the present disclosure discloses a specific solution for the LMF to negotiate with the network-side device to determine the first SL PRS configuration. The present disclosure provides a processing method for a scenario of "SL PRS configuration negotiation" to provide a negotiation mechanism for the SL PRS configuration between the LMF and the network-side device, which reduces the situation where the SL PRS configuration cannot be determined, and improves an accuracy of an SL PRS configuration determination, thereby improving an accuracy of a position determination.

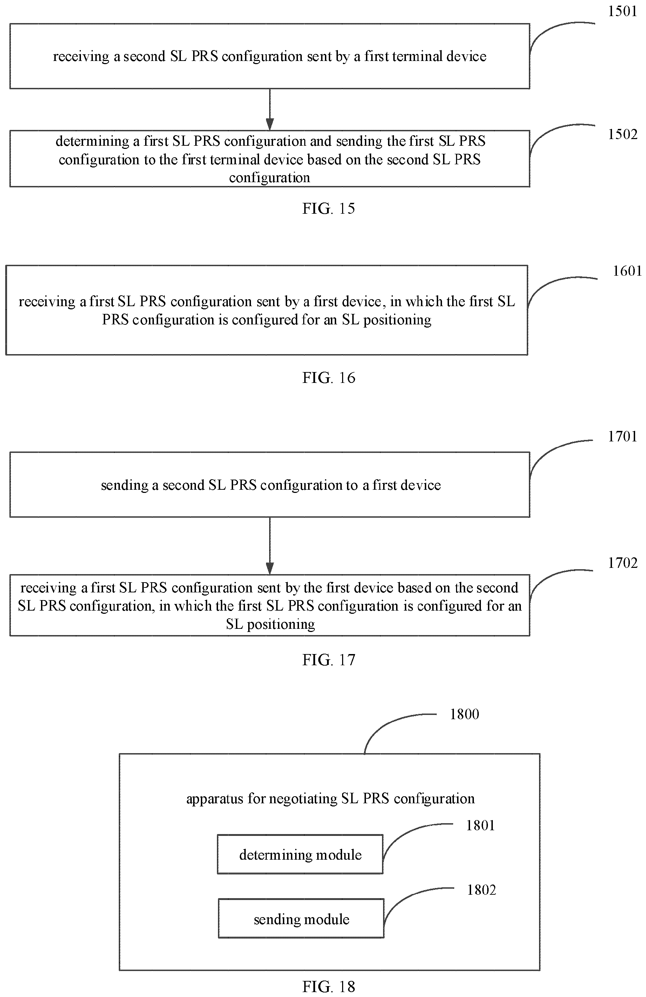

FIG. 15 is a schematic flowchart of a method for negotiating an SL PRS configuration provided by an embodiment of the present disclosure. The method is performed by a first device. As shown in FIG. 15, the method may include the following steps.

In step 1501, a second SL PRS configuration sent by a first terminal device is received.

In step 1502, a first SL PRS configuration is determined and the first SL PRS configuration is sent to the first terminal device, based on the second SL PRS configuration.

In an embodiment of the present disclosure, the first SL PRS configuration includes at least one of:
a periodic first SL PRS configuration;
a semi-persistent first SL PRS configuration; or
a non-periodic first SL PRS configuration.

In an embodiment of the present disclosure, the first terminal device and a second terminal device may negotiate to determine the first SL PRS configuration via a sidelink LPP message, a PC5-S message or an RRC message.

In an embodiment of the present disclosure, the sidelink LPP message includes request assistance information of a sidelink LPP and/or provide assistance information of a sidelink LPP.

In summary, in embodiments of the present disclosure, the second SL PRS configuration sent by the first terminal device is received; and the first SL PRS configuration is determined and sent to the first terminal device based on the second SL PRS configuration. In embodiments of the present disclosure, the first SL PRS configuration may be sent to the first terminal device in a case that the preset condition is satisfied, which reduces a situation where the SL PRS configuration cannot be determined, and may provide a negotiation mechanism for the SL PRS configuration. An embodiment of the present disclosure specifically discloses a solution for determining the first SL PRS configuration based on the second SL PRS configuration sent by the second terminal device. The present disclosure provides a processing method for a scenario of "SL PRS configuration negotiation" to provide a negotiation mechanism for the SL PRS configuration between the first terminal device and the second terminal device, which reduces the situation where the SL PRS configuration cannot be determined, and improves an accuracy of an SL PRS configuration determination, thereby improving an accuracy of a position determination.

FIG. 16 is a schematic flowchart of a method for negotiating an SL PRS configuration provided by an embodiment of the present disclosure. The method is performed by a first terminal device. As shown in FIG. 16, the method may include a following step.

In step 1601, a first SL PRS configuration sent by a first device is received. The first SL PRS configuration is configured for an SL positioning.

In summary, in embodiments of the present disclosure, the first SL PRS configuration sent by the first device is received, and the first SL PRS configuration is configured for the SL positioning. In embodiments of the present disclosure, the first SL PRS configuration sent by the first device is received, which reduces a situation where the SL PRS configuration cannot be determined, and may provide a negotiation mechanism for the SL PRS configuration. The present disclosure provides a processing method for a scenario of "SL PRS configuration negotiation" to provide a negotiation mechanism for the SL PRS configuration between the first terminal device and the first device, which reduces the situation where the SL PRS configuration cannot be determined, and improves an accuracy of an SL PRS configuration determination, thereby improving an accuracy of a position determination.

In an embodiment of the present disclosure, receiving the first SL PRS configuration sent by the first device includes:
sending a second SL PRS configuration to the first device; and
receiving a first SL PRS configuration sent by the first device based on the second SL PRS configuration.

Also, in an embodiment of the present disclosure, the first terminal device may send the second SL PRS configuration to the first device. The first device may receive the second SL PRS configuration sent by the first terminal device. The first device may determine the first SL PRS configuration based on the second SL PRS configuration. The first device may send the first SL PRS configuration to the first terminal device. The first terminal device may receive the first SL PRS configuration sent by the first device.

In an embodiment of the present disclosure, in a case that the first device includes a second terminal device, a preset condition includes at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

For example, in an embodiment of the present disclosure, in a case that the first device includes the second terminal device, the preset condition may include at least one of the above, that is, the preset condition may be one of the above, or a combination of multiple ones. For example, the preset condition may only be receiving the positioning-related assistance information request sent by the first terminal device, or the preset condition may also be receiving the positioning-related assistance information request sent by the first terminal device and determining to send the first SL PRS configuration to the first terminal device.

For example, in an embodiment of the present disclosure, in a case that the first device includes the second terminal device, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

Also, in an embodiment of the present disclosure, in a case that the first device includes the second terminal device, the third terminal device includes at least one of:
a master positioning assistance terminal device; or
a terminal device establishing an SL connection with the first terminal device.

Furthermore, in an embodiment of the present disclosure, the first SL PRS configuration includes at least one of:
a periodic first SL PRS configuration;
a semi-persistent first SL PRS configuration; or
a non-periodic first SL PRS configuration.

In an embodiment of the present disclosure, in a case that the first device includes a network-side device or an LMF, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

In an embodiment of the present disclosure, in a case that the first device includes the network-side device or the LMF, the fourth terminal device includes at least one of:
a positioning assistance terminal device;
a master positioning assistance terminal device; or
a terminal device establishing a communication connection with the network-side device or the LMF.

In an embodiment of the present disclosure, in a case that the first device includes the network-side device or the LMF, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

FIG. 17 is a schematic flowchart of a method for negotiating an SL PRS configuration provided by an embodiment of the present disclosure. The method is performed by a first terminal device. As shown in FIG. 17, the method may include the following steps.

In step 1701, a second SL PRS configuration is sent to a first device.

In step 1702, a first SL PRS configuration sent by the first device is received based on the second SL PRS configuration. The first SL PRS configuration is configured for an SL positioning.

In an embodiment of the present disclosure, the second SL PRS configuration refers to a configuration sent by the first terminal device to the first device, and the second SL PRS configuration may be an SL PRS configuration recommended by the first terminal device. The second in the second SL PRS configuration is only configured to distinguish from the first SL PRS configuration and does not specifically refer to a certain fixed SL PRS configuration.

Also, in an embodiment of the present disclosure, the first terminal device may send the second SL PRS configuration to the first device. The first device may receive the second SL PRS configuration sent by the first terminal device. The first device may determine the first SL PRS configuration based on the second SL PRS configuration. The first device may send the first SL PRS configuration to the first terminal device. The first terminal device may receive the first SL PRS configuration sent by the first device.

In summary, in embodiments of the present disclosure, the second SL PRS configuration is sent to the first device, the first SL PRS configuration sent by the first device is received, and the first SL PRS configuration is configured for the SL positioning. In embodiments of the present disclosure, the first SL PRS configuration sent by the first device is received, which reduces a situation where the SL PRS configuration cannot be determined, and may provide a negotiation mechanism for the SL PRS configuration. An embodiment of the present disclosure specifically discloses a solution of sending the second SL PRS configuration to the first device so that the first device determines the first SL PRS configuration based on the second SL PRS configuration. The present disclosure provides a processing method for a scenario of "SL PRS configuration negotiation" to provide a negotiation mechanism for the SL PRS configuration between the first terminal device and the first device, which reduces the situation where the SL PRS configuration cannot be determined, and improves an accuracy of an SL PRS configuration determination, thereby improving an accuracy of a position determination.

FIG. 18 is a schematic block diagram of an apparatus for negotiating an SL PRS configuration provided by an embodiment of the present disclosure. As shown in FIG. 18, the apparatus 1800 may be arranged on a first device side, and the apparatus 1800 may include:
a determining module 1801 configured to negotiate with a second device to determine a first SL PRS configuration, in which the first SL PRS configuration is configured for an SL positioning; and
a sending module 1802 configured to send the first SL PRS configuration to a first terminal device in response to satisfying a preset condition.

In summary, in the apparatus for negotiating the SL PRS configuration of embodiments of the present disclosure, the second device is negotiated with to determine the first SL PRS configuration via the determining module, and the first SL PRS configuration is configured for the SL positioning; and the sending module sends the first SL PRS configuration to the first terminal device in response to satisfying a preset condition. In embodiments of the present disclosure, the second device may be negotiated with to determine the first SL PRS configuration, and the first SL PRS configuration is sent to the first terminal device in a case that the preset condition is satisfied, which reduces a situation where the SL PRS configuration cannot be determined and may provide a negotiation mechanism for the SL PRS configuration. The present disclosure provides a processing apparatus for a scenario of "SL PRS configuration negotiation" to provide a negotiation mechanism for the SL PRS configuration between the first device and the second device, which reduces the situation where the SL PRS configuration cannot be determined, and improves an accuracy of an SL PRS configuration determination, thereby improving an accuracy of a position determination.

Optionally, in an embodiment of the present disclosure, the determining module 1801 is configured to negotiate with the second device to determine the first SL PRS configuration, and is specifically configured to:
negotiate with one or more candidate positioning assistance terminal devices to determine a first SL PRS configuration of one or more positioning assistance terminal devices.

Optionally, in an embodiment of the present disclosure, the determining module 1801 is configured to negotiate with the one or more candidate positioning assistance terminal devices to determine the first SL PRS configuration of the one or more positioning assistance terminal devices, and is specifically configured to:
send an SL PRS configuration request to the one or more candidate positioning assistance terminal devices; and
receive a first SL PRS configuration sent by the one or more candidate positioning assistance terminal devices for the SL PRS configuration request.

Optionally, in an embodiment of the present disclosure, the determining module 1801 is configured to negotiate with the one or more candidate positioning assistance terminal devices to determine the first SL PRS configuration of the one or more positioning assistance terminal devices, and is specifically configured to:
send a first SL PRS configuration to the one or more candidate positioning assistance terminal devices; and
receive confirmation information sent by the one or more candidate positioning assistance terminal devices for the first SL PRS configuration.

Optionally, in an embodiment of the present disclosure, the determining module 1801 is configured to negotiate with the one or more candidate positioning assistance terminal devices to determine the first SL PRS configuration of the one or more positioning assistance terminal devices, and is specifically configured to:
send an SL PRS configuration request to a master positioning assistance terminal device in the one or more candidate positioning assistance terminal devices; and
receive a first SL PRS configuration sent by the master positioning assistance terminal device for the SL PRS configuration request.

Optionally, in an embodiment of the present disclosure, the first device includes a second terminal device, the method is performed by the second terminal device, and the preset condition includes at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

Optionally, in an embodiment of the present disclosure, the first SL PRS configuration includes at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

Optionally, in an embodiment of the present disclosure, the third terminal device includes at least one of:
a master positioning assistance terminal device; or
a terminal device establishing an SL connection with the first terminal device.

Optionally, in an embodiment of the present disclosure, the determining module 1801 is configured to negotiate with the second device to determine the first SL PRS configuration, and is specifically configured to:
negotiate with the network-side device or the LMF to determine a first SL PRS configuration of one or more positioning assistance terminal devices.

Optionally, in an embodiment of the present disclosure, the determining module 1801 is configured to negotiate with the network-side device or the LMF to determine the first SL PRS configuration of the one or more positioning assistance terminal devices, and is specifically configured to:
send an SL PRS configuration request to the network-side device, in which the SL PRS configuration request carries a list of candidate positioning assistance terminal devices, a positioning manner, and capability information of each candidate positioning assistance terminal device in the list of candidate positioning assistance terminal devices; and
receive a first SL PRS configuration of at least one positioning assistance terminal device sent by the network-side device for the SL PRS configuration request.

Optionally, in an embodiment of the present disclosure, the determining module 1801 is configured to negotiate with the network-side device or the LMF to determine the first SL PRS configuration of the one or more positioning assistance terminal devices, and is specifically configured to:
send an SL PRS configuration request to the LMF, in which the SL PRS configuration request carries a list of candidate positioning assistance terminal devices, a positioning manner, and capability information of each candidate positioning assistance terminal device in the list of candidate positioning assistance terminal devices; and
receive a first SL PRS configuration of at least one positioning assistance terminal device sent by the LMF for the SL PRS configuration request.

Optionally, in an embodiment of the present disclosure, the determining module 1801 is further configured to at least one of:
negotiate with a candidate positioning assistance terminal device to determine the first SL PRS configuration via a sidelink LPP message;
negotiate with a candidate positioning assistance terminal device to determine the first SL PRS configuration via a PC5-S message; or
negotiate with a candidate positioning assistance terminal device to determine the first SL PRS configuration via an RRC message.

Optionally, in an embodiment of the present disclosure, the sidelink LPP message includes request assistance information of a sidelink LPP and/or provide assistance information of a sidelink LPP.

Optionally, in an embodiment of the present disclosure, the RRC message includes an SL RRC reconfiguration message.

Optionally, in an embodiment of the present disclosure, the first device includes a network-side device, the method is performed by the network-side device, and the determining module 1801 is configured to negotiate with the second device to determine the first SL PRS configuration, and is specifically configured to:
negotiate with an LMF to determine a first SL PRS configuration of one or more positioning assistance terminal devices.

Optionally, in an embodiment of the present disclosure, the determining module 1801 is configured to negotiate with the LMF to determine the first SL PRS configuration of the one or more positioning assistance terminal devices, and is specifically configured to:
send an SL PRS configuration request to the LMF, in which the SL PRS configuration request carries a list of candidate positioning assistance terminal devices, a positioning manner, and capability information of at least one candidate positioning assistance terminal device in the list of candidate positioning assistance terminal devices; and
receive a first SL PRS configuration of at least one positioning assistance terminal device sent by the LMF for the SL PRS configuration request.

Optionally, in an embodiment of the present disclosure, the first device includes an LMF, the method is performed by the LMF, and the determining module 1801 is configured to negotiate with the second device to determine the first SL PRS configuration, and is specifically configured to:
negotiate with a network-side device to determine a first SL PRS configuration of one or more positioning assistance terminal devices.

Optionally, in an embodiment of the present disclosure, the determining module 1801 is configured to negotiate with the network-side device to determine the first SL PRS configuration of the one or more positioning assistance terminal devices, and is specifically configured to:
send an SL PRS configuration request to the network-side device, in which the SL PRS configuration request carries a list of candidate positioning assistance terminal devices, a positioning manner, and capability information of at least one candidate positioning assistance terminal device in the list of candidate positioning assistance terminal devices; and
receive a first SL PRS configuration of at least one positioning assistance terminal device sent by the network-side device for the SL PRS configuration request.

Optionally, in an embodiment of the present disclosure, the determining module 1801 is further configured to:
negotiate the first SL PRS configuration with a terminal device via an LPP message.

Optionally, in an embodiment of the present disclosure, the LPP message includes request assistance information of an LPP and/or provide assistance information of an LPP.

Optionally, in an embodiment of the present disclosure, the preset condition includes at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

Optionally, in an embodiment of the present disclosure, the fourth terminal device includes at least one of:
a positioning assistance terminal device;
a master positioning assistance terminal device; or
a terminal device establishing a communication connection with the network-side device or the LMF.

Optionally, in an embodiment of the present disclosure, the first SL PRS configuration includes at least one of:
a first SL PRS configuration configured for the first terminal device to send an SL PRS; or
a first SL PRS configuration configured for a third terminal device to send an SL PRS. The third terminal device is any terminal device in a positioning assistance terminal device set other than the first terminal device and a fourth terminal device.

Optionally, in an embodiment of the present disclosure, the sending module 1802 is configured to send the first SL PRS configuration to the first terminal device, and is specifically configured to:
receive a second SL PRS configuration sent by the first terminal device; and
determine the first SL PRS configuration and send the first SL PRS configuration to the first terminal device based on the second SL PRS configuration.

Optionally, in an embodiment of the present disclosure, the first SL PRS configuration includes at least one of:
a periodic first SL PRS configuration;
a semi-persistent first SL PRS configuration; or
a non-periodic first SL PRS configuration.

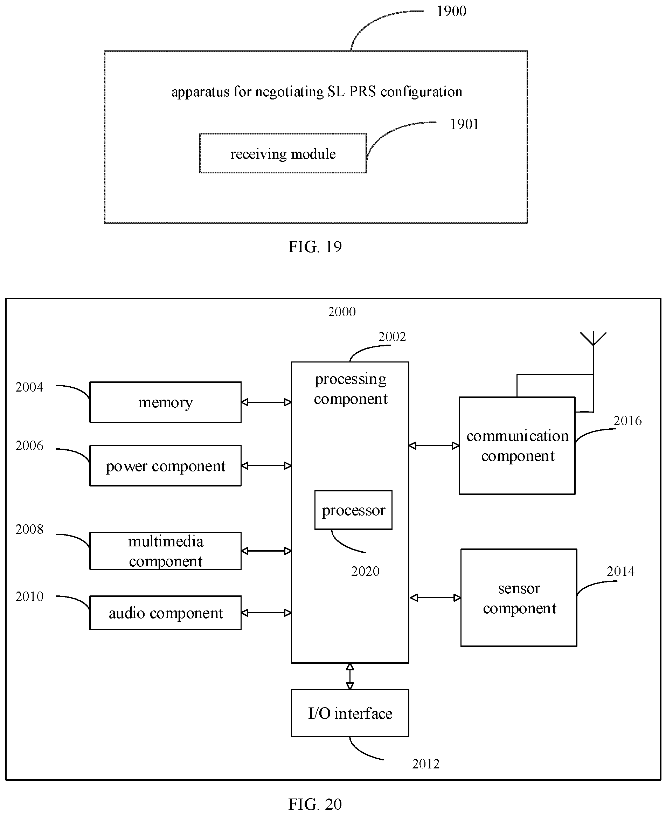

FIG. 19 is a schematic block diagram of an apparatus for negotiating an SL PRS configuration provided by an embodiment of the present disclosure. As shown in FIG. 19, the apparatus 1900 may be arranged on a first terminal device side, and the apparatus 1900 may include:
a receiving module 1901 configured to receive a first SL PRS configuration sent by a first device. The first SL PRS configuration is configured for an SL positioning.

In summary, in the apparatus for negotiating the SL PRS configuration of embodiments of the present disclosure, the first SL PRS configuration sent by the first device is received via a receiving module, and the first SL PRS configuration is configured for the SL positioning. In embodiments of the present disclosure, the first SL PRS configuration sent by the first device is received, which reduces a situation where the SL PRS configuration cannot be determined, and may provide a negotiation mechanism for the SL PRS configuration. The present disclosure provides a processing apparatus for a scenario of "SL PRS configuration negotiation" to provide a negotiation mechanism for the SL PRS configuration between the first terminal device and the first device, which reduces the situation where the SL PRS configuration cannot be determined, and improves an accuracy of an SL PRS configuration determination, thereby improving an accuracy of a position determination.

Optionally, in an embodiment of the present disclosure, the receiving module 1901 is configured to receive the first SL PRS configuration sent by the first device, and is specifically configured to:
send a second SL PRS configuration to the first device; and
receive a first SL PRS configuration sent by the first device based on the second SL PRS configuration.

FIG. 20 is a block diagram of a terminal device (UE) 2000 provided by an embodiment of the present disclosure. For example, the UE 2000 may be a mobile phone, a computer, a digital broadcast terminal device, a messaging device, a game console, a tablet device, a medical device, a fitness device, a personal digital assistant, or the like.

Referring to FIG. 20, the UE 2000 may include at least one of the following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the UE 2000, such as the operations associated with display, phone calls, data communications, camera operations, and recording operations. The processing component 2002 may include at least one processors 2020 to execute instructions to perform all or some of the steps in the above-described methods. Moreover, the processing component 2002 may include at least one modules which facilitate the interaction between the processing component 2002 and other components. For instance, the processing component 2002 may include a multimedia module to facilitate the interaction between the multimedia component 2008 and the processing component 2002.

The memory 2004 is configured to store various types of data to support the operation of the UE 2000. Examples of such data include instructions for any applications or methods operated on the UE 2000, contact data, phonebook data, messages, pictures, videos, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2006 provides power to various components of the UE 2000. The power component 2006 may include a power management system, at least one power sources, and any other components associated with the generation, management, and distribution of power in the UE 2000.

The multimedia component 2008 includes a screen providing an output interface between the UE 2000 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 2008 includes a front camera and/or a rear camera. The front camera and/or the rear camera may receive an external multimedia data while the UE 2000 is in an operation mode, such as a photographing mode or a video mode. Each of the front camera and the rear camera may be a fixed optical lens system or have focus and optical zoom capability.

The audio component 2010 is configured to output and/or input audio signals. For example, the audio component 2010 includes a microphone (MIC) configured to receive an external audio signal when the UE 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, such as keyboards, click wheels, buttons, and the like. The buttons may include, but are not limited to, a home button, a volume button, a starting button, and a locking button.

The sensor component 2014 includes at least one sensors to provide status assessments of various aspects of the UE 2000. For instance, the sensor component 2014 may detect an open/closed status of the apparatus 1900, relative positioning of components, e.g., the display and the keypad, of the UE 2000. The sensor component 2014 may also detect a change in position of the UE 2000 or a component of the UE 2000, a presence or absence of user contact with the UE 2000, an orientation or an acceleration/deceleration of the UE 2000, and a change in temperature of the UE 2000. The sensor component 2014 may include a proximity sensor configured to detect the presence of nearby objects without any physical contact. The sensor component 2014 may further include a light sensor, such as a CMOS or CCD image sensor, for use in imaging applications. In some embodiments, the sensor component 2014 may further include an accelerometer sensor, a gyroscope sensor, a magnetic sensor, a pressure sensor, or a temperature sensor.

The communication component 2016 is configured to facilitate communication, wired or wireless, between the UE 2000 and other devices. The UE 2000 can access a wireless network based on a communication standard, such as Wi-Fi, 2G, or 3G, or a combination thereof. In an illustrative embodiment, the communication component 2016 receives a broadcast signal or broadcast associated information from an external broadcast management system via a broadcast channel. In an illustrative embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 2000 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

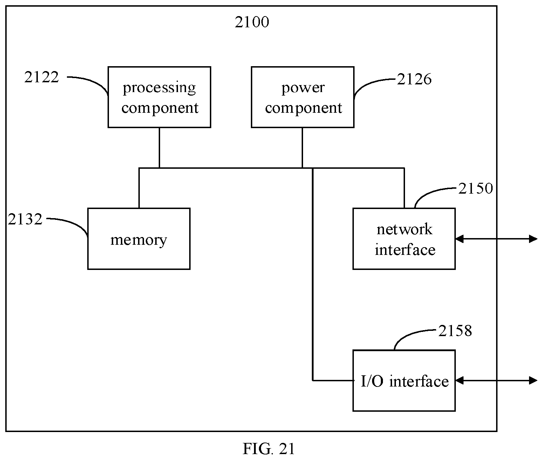

FIG. 21 is a block diagram of a network-side device 2100 provided by an embodiment of the present disclosure. For example, the network-side device 2100 may be provided as one network-side device. Referring to FIG. 21, the network-side device 2100 includes a processing component 2122, which further includes at least one of processors, and a memory resource represented by a memory 2132 configured to store instructions executable by the processing component 2122, such as application programs. The application programs stored in the memory 2132 may include one or more modules each corresponding to a set of instructions. In addition, the processing component 2122 is configured to execute instructions to perform any of the foregoing methods performed by the network-side device, for example, the method shown in FIG. 11.

The network-side device 2100 may also include a power component 2126 configured to perform the power management of the network-side device 2100, a wired or wireless network interfaces 2150 configured to connect the network-side device 2100 to a network, and an input/output (I/O) interface 2158. The network-side device 2100 may operate based on an operating system stored in the memory 2132, such as Windows Server TM, Mac OS XTM, Unix TM, Linux TM, Free BSDTM, or the like.

In the above embodiments provided by the present disclosure, the methods provided in embodiments of the present disclosure are introduced from perspectives of the network-side device and the UE respectively. In order to implement the various functions in the methods provided by the above embodiments of the present disclosure, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

In the above embodiments provided by the present disclosure, the methods provided in embodiments of the present disclosure are introduced from perspectives of the network-side device and the UE respectively. In order to implement the various functions in the methods provided by the above embodiments of the present disclosure, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

Embodiments of the present disclosure provide a communication device, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication device may be a terminal device (such as the terminal device in the foregoing method embodiments), may also be a device in the terminal device, and may also be a device that can be used in conjunction with the terminal device. Alternatively, the communication device may be a network device, may also be a device in the network device, and may also be a device that can be used in conjunction with the network device.

Embodiments of the present disclosure provide another communication device, which may be a network device, may also be a terminal device (such as the terminal device in the foregoing method embodiments), may also be a chip, a chip system, or a processor that supports the network device to implement the above methods, and may also be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network-side device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive code instructions and transmit the code instructions to the processor. The processor runs the code instructions to enable the communication device to execute the methods as described in the above method embodiments.

The communication device is a communication apparatus. The processor is configured to execute the method shown in any one of FIGS. 2 to 15.

The communication device is a first terminal device (such as the terminal device in the foregoing method embodiments). The processor is configured to execute the method shown in any one of FIG. 16.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present disclosure is not limited thereto, and the structure of the communication device may not be limited thereto. The communication device may be a stand-alone device or may be a part of a larger device. For example, the communication device may be:
(1) a stand-alone integrated circuit (IC), or a chip, or a chip system or subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

For the case where the communication device may be a chip or a chip system, the chip includes a processor and an interface. One or more processors may be provided, and more than one interface may be provided.

Optionally, the chip further includes a memory for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present disclosure.

The present disclosure also provides a readable storage medium having stored thereon instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present disclosure are distinguished only for convenience of description, and are not intended to limit the scope of embodiments of the present disclosure, and nor are they intended to represent sequential order.

The term "at least one" used in the present disclosure may also be described as one or more, and the term "a plurality of" may be two, three, four or more, which are not limited in the present disclosure. In embodiments of the present disclosure, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for negotiating a sidelink positioning reference signal (SL PRS) configuration, performed by a first device, comprising:
negotiating with a second device to determine a first SL PRS configuration, wherein the first SL PRS configuration is configured for an SL positioning; and
sending the first SL PRS configuration to a first terminal device in response to satisfying a preset condition.

2. The method according to claim 1, wherein negotiating with the second device to determine the first SL PRS configuration comprises:
negotiating with one or more candidate positioning assistance terminal devices to determine a first SL PRS configuration of one or more positioning assistance terminal devices.

3. The method according to claim 2, wherein negotiating with the one or more candidate positioning assistance terminal devices to determine the first SL PRS configuration of the one or more positioning assistance terminal devices comprises:
sending an SL PRS configuration request to the one or more candidate positioning assistance terminal devices; and
receiving a first SL PRS configuration sent by the one or more candidate positioning assistance terminal devices for the SL PRS configuration request.

4. The method according to claim 2, wherein negotiating with the one or more candidate positioning assistance terminal devices to determine the first SL PRS configuration of the one or more positioning assistance terminal devices comprises:
sending a first SL PRS configuration to the one or more candidate positioning assistance terminal devices; and
receiving confirmation information sent by the one or more candidate positioning assistance terminal devices for the first SL PRS configuration.

5. The method according to claim 2, wherein negotiating with the one or more candidate positioning assistance terminal devices to determine the first SL PRS configuration of the one or more positioning assistance terminal devices comprises:
sending an SL PRS configuration request to a master positioning assistance terminal device in the one or more candidate positioning assistance terminal devices; and
receiving a first SL PRS configuration sent by the master positioning assistance terminal device for the SL PRS configuration request.

6. The method according to claim 1, wherein the first device comprises a second terminal device, the method is performed by the second terminal device, and the preset condition comprises at least one of:
receiving a positioning-related assistance information request sent by the first terminal device;
receiving positioning-related assistance information corresponding to the first terminal device sent by a network-side device, a location management function (LMF) or a positioning assistance terminal device; or
determining to send the first SL PRS configuration to the first terminal device or determining to send an SL PRS update configuration to the first terminal device.

7. The method according to claim 6, wherein the first SL PRS configuration comprises at least one of:
a first SL PRS configuration configured for the second terminal device to send an SL PRS;
a first SL PRS configuration configured for the first terminal device to send an SL PRS; or
a first SL PRS configuration configured for a third terminal device to send an SL PRS.

8. The method according to claim 7, wherein the third terminal device comprises at least one of:
a master positioning assistance terminal device; or
a terminal device establishing an SL connection with the first terminal device.

9. The method according to claim 6, wherein negotiating with the second device to determine the first SL PRS configuration comprises:
negotiating with the network-side device or the LMF to determine a first SL PRS configuration of one or more positioning assistance terminal devices.

10. The method according to claim 9, wherein negotiating with the network-side device or the LMF to determine the first SL PRS configuration of the one or more positioning assistance terminal devices comprises:
sending an SL PRS configuration request to the network side device, wherein the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the network-side device for the SL PRS configuration request.

11. The method according to claim 9, wherein negotiating with the network-side device or the LMF to determine the first SL PRS configuration of the one or more positioning assistance terminal devices comprises:
sending an SL PRS configuration request to the LMF, wherein the SL PRS configuration request carries a list of candidate positioning assistance terminal devices, a positioning manner, and capability information of each candidate positioning assistance terminal device in the list of candidate positioning assistance terminal devices; and
receiving a first SL PRS configuration of at least one positioning assistance terminal device sent by the LMF for the SL PRS configuration request.

12. The method according to claim 6, further comprising at least one of:
negotiating with a candidate positioning assistance terminal device to determine the first SL PRS configuration via a sidelink LPP message;
negotiating with a candidate positioning assistance terminal device to determine the first SL PRS configuration via a PC5-S message; or
negotiating with a candidate positioning assistance terminal device to determine the first SL PRS configuration via an RRC message.

13. The method according to claim 12, wherein the sidelink LPP message comprises request assistance information of a sidelink LPP and/or provide assistance information of a sidelink LPP.

14. The method according to claim 12, wherein the RRC message comprises an SL RRC reconfiguration message.

15. The method according to claim 1, wherein the first device comprises a network-side device, the method is performed by the network-side device, and negotiating with the second device to determine the first SL PRS configuration comprises:
negotiating with an LMF to determine a first SL PRS configuration of one or more positioning assistance terminal devices.

16. The method according to claim 15, wherein negotiating with the LMF to determine the first SL PRS configuration of the one or more positioning assistance terminal devices comprises:
sending an SL PRS configuration request to the LMF, wherein the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the LMF for the SL PRS configuration request.

17. The method according to claim 1, wherein the first device comprises an LMF, the method is performed by the LMF, and negotiating with the second device to determine the first SL PRS configuration comprises:
negotiating with a network-side device to determine a first SL PRS configuration of one or more positioning assistance terminal devices.

18. The method according to claim 17, wherein negotiating with the network-side device to determine the first SL PRS configuration of the one or more positioning assistance terminal devices comprises:
sending an SL PRS configuration request to the network-side device, wherein the SL PRS configuration request carries a list of candidate positioning assistance terminal devices, a positioning manner, and capability information of at least one candidate positioning assistance terminal device in the list of candidate positioning assistance terminal devices; and
receiving a first SL PRS configuration of at least one positioning assistance terminal device sent by the network-side device for the SL PRS configuration request.

19. The method according to claim 17, further comprising:
negotiating with a terminal device to determine the first SL PRS configuration via an LPP message.

20. The method according to claim 19, wherein the LPP message comprises request assistance information of an LPP and/or provide assistance information of an LPP.

21. The method according to claim 15 or 17, wherein the preset condition comprises at least one of:
receiving a positioning-related assistance information request sent by the first terminal device;
receiving positioning-related assistance information corresponding to the first terminal device sent by a fourth terminal device; or
determining to send the first SL PRS configuration to the first terminal device or determining to send an SL PRS update configuration to the first terminal device.

22. The method according to claim 21, wherein the fourth terminal device comprises at least one of:
a positioning assistance terminal device;
a master positioning assistance terminal device; or
a terminal device establishing a communication connection with the network-side device or the LMF.

23. The method according to claim 15 or 17, wherein the first SL PRS configuration comprises at least one of:
a first SL PRS configuration configured for the first terminal device to send an SL PRS; or
a first SL PRS configuration configured for a third terminal device to send an SL PRS, wherein the third terminal device is any terminal device in a positioning assistance terminal device set other than the first terminal device and a fourth terminal device.

24. The method according to claim 1, wherein sending the first SL PRS configuration to the first terminal device comprises:
receiving a second SL PRS configuration sent by the first terminal device; and
determining the first SL PRS configuration and sending the first SL PRS configuration to the first terminal device based on the second SL PRS configuration.

25. The method according to claim 1, wherein the first SL PRS configuration comprises at least one of:
a periodic first SL PRS configuration;
a semi-persistent first SL PRS configuration; or
a non-periodic first SL PRS configuration.

26. A method for negotiating a sidelink positioning reference signal (SL PRS) configuration, performed by a first terminal device, comprising:
receiving a first SL PRS configuration sent by a first device, wherein the first SL PRS configuration is configured for an SL positioning.

27. The method according to claim 17, wherein receiving the first SL PRS configuration sent by the first device comprises:
sending a second SL PRS configuration to the first device; and
receiving a first SL PRS configuration sent by the first device based on the second SL PRS configuration.

28. An apparatus for negotiating an SL PRS configuration, arranged on a first device side, comprising:
a determining module configured to negotiate with a second device to determine a first SL PRS configuration, wherein the first SL PRS configuration is configured for an SL positioning; and
a sending module configured to send the first SL PRS configuration to a first terminal device in response to satisfying a preset condition.

29. An apparatus for negotiating an SL PRS configuration, arranged on a first terminal device side, comprising:
a receiving module configured to receive a first SL PRS configuration sent by a first device, wherein the first SL PRS configuration is configured for an SL positioning.

30. A first device, comprising:
a processor; and
a memory having stored therein a computer program,
wherein the processor, when executing the computer program stored in the memory, causes the device to perform the method according to any one of claims 1 to 25.

31. A first terminal device, comprising:
a processor; and
a memory having stored therein a computer program,
wherein the processor, when executing the computer program stored in the memory, causes the device to perform the method according to any one of claims 26 to 27.

32. A communication device, comprising: a processor and an interface circuit;
wherein the interface circuit is configured to receive code instructions and transmit the code instructions to the processor; and
the processor is configured to run the code instructions to perform the method according to any one of claims 1 to 25.

33. A communication device, comprising: a processor and an interface circuit;
wherein the interface circuit is configured to receive code instructions and transmit the code instructions to the processor; and
the processor is configured to run the code instructions to perform the method according to any one of claims 26 to 27.

34. A computer-readable storage medium having stored therein instructions that, when executed, cause the method according to any one of claims 1 to 25 to be implemented.

35. A computer-readable storage medium having stored therein instructions that, when executed, cause the method according to any one of claims 26 to 27 to be implemented.
